# EUROPEAN PATENT APPLICATION

(11) **EP 3 392 212 A1**
(43) Date of publication of application: **24.10.2018**
(21) Application number: 16874950.5
(22) Date of filing: 16.11.2016
(51) Int. Cl.: C02F 11/04, B01J 13/00

(54) **POLYMER METAL PARTICLES FOR PRODUCING BIOGAS**

(30) Priority: 16.12.2015 ES 201531820
(71) Applicant: Enersos I, S.L., 02001 Albacete (ES)
(72) Inventor: PEREZ MARTINEZ, Francisco Carlos, 02001 Albacete (ES); PEREZ MARTINEZ, Luis Manuel, 02001 Albacete (ES)
(74) Representative: Temiño Ceniceros, Ignacio
(86) International application number: PCT/ES2016/070815
(87) International publication number: WO 2017/103301

(57) **Abstract**

The present invention relates to controlled-release metal microparticles comprising a nucleus consisting of at least one metal salt selected from nickel salt, cobalt salt, copper salt, manganese salt, magnesium salt, and mixtures thereof, and a polymer, and a coating of a polyethylene glycol-derived polymer. The invention also relates to the use of the microparticles for producing biogas from biodegradable material and to a method for producing biogas comprising the use of said microparticles.

## Description

### FIELD OF THE INVENTION

The present invention relates to the use of polymer metal particles for producing biogas and to a method of producing biogas using said particles.

### STATE OF THE ART

Biogas is a fuel gas that is generated in natural environments or specific devices by the biodegradation reactions of organic matter by means of the action of microorganisms and other factors, in the absence of oxygen.

Biogas production by anaerobic decomposition is a way for the bioremediation and treatment of biodegradable waste and for the attainment of a high-value fuel.

Biogas consists primarily of methane (CH₄) and carbon dioxide (CO₂), containing small proportions of other gases such as hydrogen, nitrogen, oxygen, and hydrogen sulfide.

There are different methods today for producing biogas; in that sense, patent application WO2012/123331 describes a method for producing biogas by means of using iron oxide nanoparticles.

However, the method described in application WO2012/123331 poses certain problems as it is limited by particle size, as evidenced by the description of said application which indicates that a positive effect is observed for the iron particles if they have a nano- or millimetric size, but unfavorable effects are observed with a micrometric particle size. Another limitation of said patent application is the dose of application as evidenced by the description of said application which indicates a significant effect at a very high dose of 0.5 to 1 mg/ml. A third limitation of application WO2012/123331 is the absence of a biogas production accelerating effect since the favorable effect is not observed until the first 10 days have elapsed following the start of the experiment. In fact, during the first 10 days of the experiment, an unfavorable effect of the described iron nanoparticles is observed.

There is therefore a need to provide a profitable and efficient method for producing biogas in a sustained manner.

### BRIEF DESCRIPTION OF THE INVENTION

The present invention solves the problems of the state of the art as it provides a method for producing biogas from biodegradable material which comprises the use of controlled-release metal microparticles reducing fluctuations in the concentration of the active material and its corresponding toxicity.

In a first aspect, the present invention relates to controlled-release metal microparticles (hereinafter, microparticles of the present invention) comprising a nucleus consisting of at least one metal salt selected from nickel salt, cobalt salt, copper salt, manganese salt, magnesium salt, and mixtures thereof, and a polymer, and a coating of a polyethylene glycol (PEG)-derived polymer. In other words, they are metal salt microparticles combined with a natural polymer, microencapsulated in a PEG-derived polymer.

As it is used herein, the term "microencapsulated" refers to the production of a particle the three dimensions of which are in microscale, where the microscale is the range between about 1 and 100 µm.

In a particular embodiment of the present invention, the polymer is selected from cellulose, chitosan, agarose, or polyvinylidene fluoride, among others. In a preferred embodiment, the polymer is a natural polymer.

In another particular embodiment of the present invention, the PEG-derived polymer is selected from PEG, polyacrylic acid (PAA), or isopropylacrylamine (PNIPAM).

In another particular embodiment of the present invention, the diameter of the microparticles is comprised between 1 and 10 µm.

In a second aspect, the present invention relates to a method for producing biogas (hereinafter, method of the present invention) from biodegradable material, the method comprising the use of microparticles of the present invention and the following steps:
a) adding the microparticles of the present invention to a biodegradable material inoculated with microorganisms in a reactor,
b) performing an anaerobic digestion.

In the present invention, the order of adding the microparticles, biodegradable material, or inoculum is not relevant, where they can be added in any order.

As it is used herein, the term "biodegradable material" refers to an organic material capable of being converted generally by bacteria and other microorganisms into basic elements such as CH₄ and CO₂. In a particular embodiment of the present invention, the biodegradable material consists of sludge from a waste water, industrial waste, municipal solid waste, animal byproduct, or agricultural waste treatment plant.

As it is used herein, the term "biogas" refers to a gas produced by the biological decomposition of organic matter in the absence of oxygen. Biogas is produced by anaerobic digestion of biodegradable materials. This type of biogas primarily comprises CH₄ and CO₂.

As it is used herein, the term "anaerobic digestion" refers to a series of processes in which microorganisms decompose a biodegradable material in the absence of oxygen used for industrial or domestic purposes to manage waste and/or release energy.

In a particular embodiment, the microparticles of the present invention are first dissolved before being added to the digester.

In another particular embodiment of the present invention, the microparticles of the present invention are dissolved in the medium present in the digester, allowing metal ions to be distributed homogeneously in the solution and released in a controlled manner throughout the methanation process. The concentration of the microparticles in the digester is thereby kept constant for a longer period, covering almost the entire retention period required for optimizing biogas production from a biodegradable material. High concentrations at the time of inoculation and a quick drop in the concentration of active substances are thereby prevented.

The microencapsulation of metal salts and cellulose in the PEG-derived polymer causes controlled-release of the metal salts, reducing fluctuations in the concentration of the active material and its resulting toxicity.

In another particular embodiment of the present invention, the concentration of the microparticles in the digester is comprised between 0.5 and 50 µg/ml, such that they do not cause toxicity when administered at low doses.

In another particular embodiment of the present invention, the reaction temperature is comprised between 30°C and 70°C, preferably between 37°C and 40°C.

In another particular embodiment of the present invention, the microorganisms are mesophilic bacteria, acidogenic bacteria, acetogenic bacteria, methanogenic bacteria, or a mixture thereof.

In a particular embodiment, the method is performed continuously (as a constant inflow) or semi-continuously (by adding small amounts from time to time), preferably in a premix tank which feeds the first reactor in a plurality of reactors that are connected in series. However, this supply can be done in any of the reactors supplied in series, provided that there is recirculation of content between them.

### DESCRIPTION OF THE DRAWINGS

Figure 1 shows the laser diffraction particle size distribution after preparing a 1% solution in distilled water (frequency vs. particle size (µm)).
Figure 2 shows the graph of biogas production (ml) vs. time (days) in the presence of nickel, cobalt, copper, magnesium, and manganese metal microparticles combined with cellulose and polyethylene glycol (three replicates, Groups 1 to 3). The biogas production in another group without microparticles was used as a control.
Figure 3 shows the graph of biogas production (m³) vs. time (days) in the presence of nickel, cobalt, copper, magnesium, and manganese metal microparticles combined with cellulose and polyethylene glycol.

Figure 4 shows the graph of the generated power (Kw) vs. time (days) in the presence of nickel, cobalt, copper, magnesium, and manganese metal microparticles combined with cellulose and polyethylene glycol, after restarting production in a biogas plant. The data obtained from another restart following production shutdown without using microencapsulated particles was used as a control.

### DETAILED DESCRIPTION OF THE INVENTION

### Example 1. Preparation of the inoculum

The sludge for inoculation was obtained from anaerobic mesophilic reactors in animal byproduct treatment plants. The sludge was obtained from the recirculation of these reactors. This sludge was stored for two weeks at 37°C to remove any biodegradable organic matter that may interfere with the results. Next, to prepare the inoculum, 2 g/L of acetic acid, 0.5 g/L of propionic acid, and 0.5 g/L of butyric acid were added right before performing the biogas production determination test in the laboratory.

### Example 2. Preparation of microencapsulated particles

Different types of microencapsulated particles were synthesized in aqueous phase using Milli-Q grade water. All the reagents were acquired from Sigma-Aldrich and used in the form in which they were received.

To prepare the microparticles in aqueous phase using Milli-Q grade water, 50 g of nickel, cobalt, copper, magnesium, or manganese acetate were dissolved in 1 liter of water. After 30 min of vigorous stirring, 5 g of cellulose acetate were added, and vigorous stirring was continued for another 30 minutes. Next, 100 g of PEG6000 were added, and vigorous stirring was continued for another 2 hours. Finally, the solvents were removed by evaporation and the samples were purified after synthesis to remove unreacted salts and excess stabilizers.

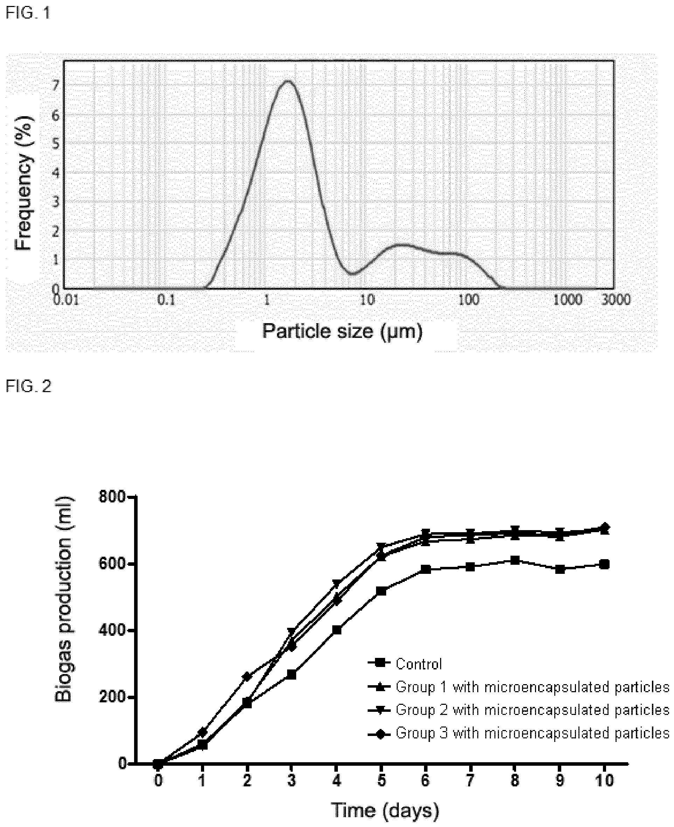

Figure 1 shows the size of the microencapsulated particles prepared by means of this method. This measurement was taken several times and after repeated methods of synthesis and similar results were obtained; this thereby shows that it is a stable and reproducible process.

### Example 3. Determination of biogas production

The methodology for determining biogas production in anaerobic conditions was performed in 600 ml leaktight gas reactors equipped with a pressure transducer for monitoring biogas production. A sample of about 2 kg was obtained from the fermenter, seeking to first mix the content of the reactor which assures sample homogeneity and a composition similar to the total content of the fermenter. Each anaerobic reactor contained 500 ml of inoculum (2 g/L of acetic acid, 0.5 g/L of propionic acid, and 0.5 g/L of butyric acid; using the digestate stored for 21 days as a solvent to remove the residual organic matter) and 500 µg of microencapsulated particles. The pH of each reactor was adjusted to 8. Nitrogen gas was used before the test to purge the residual oxygen that may have been left inside the reactors. The reactors were stirred manually and the biogas was purged every working day. A sample was also prepared only with the digestate (blank) to subtract biogas production from any biodegradable organic matter that may have been left after 21 days of storage prior to the study, and another sample was prepared only with the inoculum (control) to compare biogas production with the test in which microencapsulated particles were added. Each experiment was conducted in triplicate and the results are shown in Figure 2.

As shown in Figure 2 (expressed in mean values ± SEM), the microencapsulated particles consisting of metal salts, cellulose, and PEG caused an increase of 17.5 ± 0.4% in biogas production, in comparison with the control. On the other hand, the CH₄:CO₂ ratio increased by 11.4 ± 0.1% with the presence of microencapsulated particles. As a whole, the increase in productivity in the biogas production process is equivalent to 28.9 ± 0.4%, including increases in the amount and quality of the biogas that is generated. This experiment with the microencapsulated particles was repeated under the same conditions several times and the same results were obtained.

### Example 4. Determination of biogas production in a biogas plant

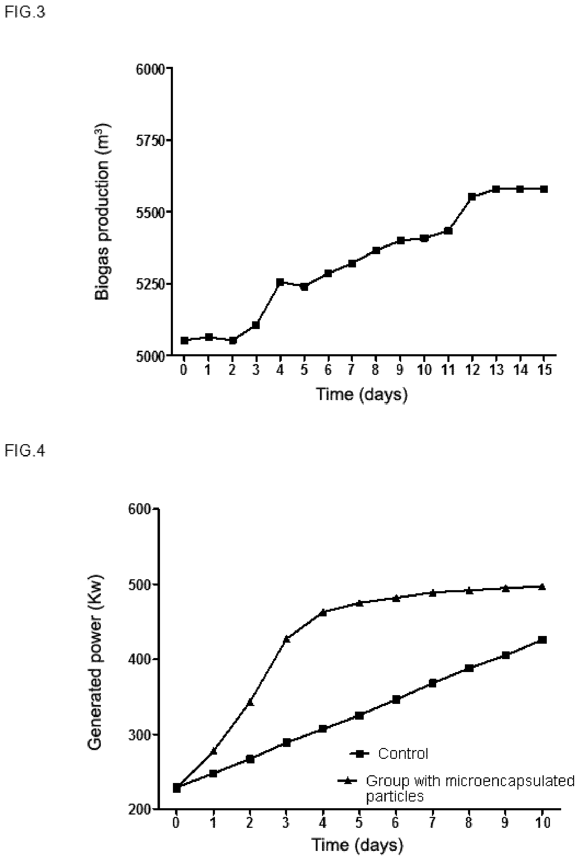

A biogas facility that worked with bovine manure and codigestion with plant debris and showed stable biogas production was fed with a specific amount of microencapsulated particles depending on the volume of waste introduced into the reactor daily and on the mean biogas production of the plant for the last 3 months. The daily feeding consisted of 180 ± 10 tons of bovine manure and 1.5 ± 0.1 tons of plant debris (fodder and grass silage). After the daily addition of the microencapsulated particles at a dose of 30 g/ton of bovine manure, an increase both in the quality of the gas and in the amount of the gas formed (Figure 3) took place in a period of 24 to 72 h. Specifically, the CH₄:CO₂ ratio increased by 4.57 ± 0.07% after the first 48 hours of study, this increase remaining constant until the end of the process. Furthermore, a constant improvement in process conditions was observed for 15 days of the study, and an increase in biogas production of 11.04% was observed at the end of the study. Overall, biogas facility production increased by 15.45% in the first 15 days with respect to the production at the start of the study.

As shown in Figure 3, the microencapsulated particles consisting of metal salts, cellulose, and PEG at a dose of 30 g/ton of bovine manure caused a significant increase in biogas production in comparison with the start of the study. Furthermore, the CH₄:CO₂ ratio in the biogas generated during the process also increased.

### Example 5. Determination of the time required to reach a stable biogas production in a restart following complete biogas production shutdown

Biogas formation in a biogas facility in which bovine manure is fermented together with plant debris was shut down completely for a week. After this shutdown, biogas production was restarted by introducing 180 ± 10 tons of bovine manure and 1.5 ± 0.1 tons of plant debris (fodder and grass silage). Furthermore, they were treated with microencapsulated particles daily at a dose of 150 g/ton of bovine manure. The data obtained following another week-long shutdown, after which the reactor was fed with the same amount of bovine manure and plant debris, but without microencapsulated particles, was used as a control.

In the restart process with microencapsulated particle treatment, a quick increase in the amount and quality of the biogas was observed, whereas in the control data this increase that was observed was more gradual (Figure 4). In fact, the time to reach a stable production was 4 days in the presence of microencapsulated particles, in comparison with the 15 days required to reach a stable production without adding microencapsulated particles along with a biodegradable material.

## Claims

1. Controlled-release metal microparticles, **characterized in that** they comprise a nucleus consisting of at least one metal salt selected from nickel salt, cobalt salt, copper salt, manganese salt, magnesium salt, and mixtures thereof, and a polymer, and a coating of a polyethylene glycol-derived polymer.

2. Microparticles according to claim 1, wherein the polymer is selected from cellulose, chitosan, agarose, or polyvinylidene fluoride.

3. Microparticles according to any of the preceding claims, wherein the polyethylene glycol-derived polymer is selected from polyethylene glycol, polyacrylic acid, or isopropylacrylamine.

4. Microparticles according to any of the preceding claims, wherein the diameter of the microparticles is comprised between 1 and 10 µm.

5. Use of microparticles according to any of claims 1 to 4 for producing biogas.

6. Method for producing biogas from biodegradable material, wherein the method comprises the use of microparticles according to claims 1 to 4 and the following steps:
a) adding the microparticles according to any of claims 1 to 4 to a biodegradable material inoculated with microorganisms in a reactor,
b) performing an anaerobic digestion.

7. Method according to claim 6, wherein the microparticles are first dissolved before being added to the digester.

8. Method according to any of claims 6 to 7, wherein the concentration of the microparticles in the digester is comprised between 0.5 and 50 µg/ml.

9. Method according to any of claims 6 to 8, wherein the reaction temperature is comprised between 30°C and 70°C.

10. Method according to any of claims 6 to 9, wherein the microorganisms are mesophilic bacteria, acidogenic bacteria, acetogenic bacteria, methanogenic bacteria, or a mixture thereof.

11. Method according to any of claims 6 to 10, **characterized in that** it is performed continuously.
